# NOUVEAU FASCICULE DE BREVET EUROPEEN

(11) **EP 1 907 993 B2**
(45) Date de publication et mention de la décision concernant l'opposition: **16.03.2022**
(45) Mention de la délivrance du brevet: 04.12.2013
(21) Numéro de dépôt: 06778905.7
(22) Date de dépôt: 24.07.2006
(51) Int. Cl.: G06K 19/07, G06K 19/073, G06K 19/077

(54) **ENTITE ELECTRONIQUE AVEC MOYENS DE COMMUNICATION PAR CONTACT ET A DISTANCE**
ELEKTRONISCHE ENTITÄT MIT KONTAKT- UND FERNKOMMUNIKATIONSMITTELN
ELECTRONIC ENTITY WITH CONTACT AND REMOTE COMMUNICATION MEANS

(30) Priorité: 25.07.2005 FR 0507887
(43) Date de publication de la demande: 09.04.2008
(60) Demande divisionnaire: 12159987.2
(73) Titulaire: IDEMIA France, 92400 Courbevoie (FR)
(72) Inventeur: GOYET, Christophe, F-69004 Lyon (FR)
(74) Mandataire: Santarelli
(86) Numéro de dépôt international: PCT/FR2006/001797
(87) Numéro de publication internationale: WO 2007/012738

(56) Documents cités:
- EP-A- 0 945 828
- EP-A- 1 258 831
- WO-A2-2006/138440
- DE-A1- 10 028 821
- FR-A- 2 809 516
- US-A- 5 206 495
- US-A- 6 138 918

## Description

L'invention concerne une entité électronique avec des moyens de communication par contact et des moyens de communication à distance, ainsi qu'un procédé de commande de cette entité électronique.

Une entité électronique, telle que par exemple une carte à microcircuit, qui inclut en général des circuits électroniques aptes à mémoriser des informations, possède des moyens de communication avec l'extérieur, afin notamment d'échanger des informations détenues par l'entité électronique avec des dispositifs extérieurs, du type lecteur ou terminal.

Parmi les moyens de communication couramment utilisés, on distingue les moyens de communication par contact, pour lesquels un contact physique entre l'entité électronique et le terminal est une condition nécessaire de l'établissement d'une communication, et les moyens de communication à distance, grâce auxquels une communication entre l'entité électronique et un lecteur est possible sans contact physique entre ces deux éléments, avec une portée de l'ordre de quelques centimètres en général.

Certaines entités électronique regroupent d'ailleurs des moyens de communication des deux types précités, auquel cas les modes de fonctionnement "*par contact*" et "*sans contact*" peuvent être organisés selon les fonctionnalités requises de l'appareil pour chacun des modes de communication, comme cela est par exemple décrit dans les brevets US 5 206 495 et US 5 999 713.

Si l'utilisation des moyens de communication sans contact est connue pour sa praticité (du fait qu'aucun positionnement précis de l'entité électronique n'est nécessaire pour l'échange d'informations), elle a toutefois l'inconvénient d'un risque d'échange intempestif d'informations, par exemple par l'établissement d'une communication non souhaitée par l'utilisateur lors de son passage à proximité d'un lecteur. Ce problème est particulièrement sensible lorsque l'entité électronique détient des informations confidentielles, comme par exemple dans le cas d'un passeport électronique.

On a donc déjà cherché dans l'art antérieur à prendre des mesures pour éviter cet échange intempestif de données, parfois évoquées sous le vocable anglo-saxon '"*anti-skimming*".

Dans cet ordre d'idée, il a été proposé dans la demande de brevet WO 99/16019 de disposer un interrupteur sur la face supérieure d'une carte à microcircuit pour rendre possible la réception de données par cette carte seulement après activation de l'interrupteur. L'ajout d'un tel interrupteur sur l'entité électronique pose toutefois des problèmes de réalisation et de fiabilité (par exemple en cas de flexion répétée de l'entité électronique telle que définie par la norme ISO7816) et augmente son coût de fabrication.

C'est probablement la raison pour laquelle il a été proposé dans le brevet US 6 424 029 d'utiliser un interrupteur du type capacitif, mieux adapté à la constitution générale des entités électroniques porteuses d'informations, en particulier dans le cas des cartes à microcircuit. Si cette solution réduit les difficultés qui viennent d'être évoquées, elle ne parvient pas à les éviter totalement.

En outre, les solutions qui viennent d'être rappelées manquent de souplesse et ne permettent pas notamment d'envisager une limitation de l'accès au mode de communication sans contact, par exemple par mot de passe.

On connaît également de la demande de brevet EP 1 258 831 une carte à microcircuit avec une interface à contact et une interface sans contact dans laquelle l'interface à utiliser est déterminée en fonction du type de données à échanger. Le préambule de la revendication 1 est connu de ce document.

Dans ce contexte, l'invention propose une entité électronique selon la revendication 1.

La possibilité d'échanger les données par les moyens de communication à distance peut ainsi être gérée par le biais de la liaison par contact, par exemple au moyen d'un terminal.

L'échange de données concerné par l'autorisation est par exemple l'émission de certaines données au moins et/ou la réception de certaines données au moins.

L'entité électronique comprend également des moyens de mémorisation d'une information d'activation commandés par ladite instruction et des moyens pour autoriser l'échange (émission et/ou réception) desdites données à travers les moyens de communication à distance en présence de ladite information d'activation.

On peut ainsi séparer la réception de l'instruction et l'échange (par exemple l'émission) des données, par exemple sur le plan temporel.

L'entité électronique peut également comprendre de façon complémentaire des moyens pour inhiber l'échange desdites données à travers les moyens de communication à distance en l'absence de ladite information d'activation.

L'entité électronique est par exemple une carte à microcircuit conforme à la norme ISO14443 et/ou à la norme ISO7816.

L'invention propose de plus un procédé de commande d'une entité électronique selon la revendication 4.

Ce procédé est pratique à mettre en œuvre et possède les avantages déjà mentionnés en termes de séparation de l'autorisation et de l'échange.

Le procédé peut également comprendre une étape de mise de l'information d'activation à une valeur complémentaire de la valeur prédéterminée à un instant déterminé.

Selon un autre mode possible de réalisation, le procédé comprend une étape d'inhibition de l'échange desdites données à un instant déterminé.

L'instant déterminé peut correspondre à la réception d'une commande de fin de communication par les moyens de communication à distance, ce qui permet à l'instruction de n'autoriser qu'une seule communication.

L'instant déterminé peut être déterminé par une temporisation, ce qui permet de limiter la durée de l'autorisation dans le temps.

L'instant déterminé peut être atteint après réception d'un nombre prédéterminé de commandes via les moyens de communication à distance, ce qui permet de limiter les possibilités d'utilisation de l'autorisation.

L'instant déterminé peut correspondre à l'achèvement d'une étape d'initialisation de la communication.

On peut déterminer lors de la personnalisation de l'entité électronique si l'utilisation des moyens de communication sans contact sera autorisée par défaut.

Ladite information d'activation peut par ailleurs être modifiée à réception d'une instruction à travers des moyens de communication par contact de l'entité électronique. Il s'agit par exemple d'une instruction sécurisée.

Ce procédé peut comprendre en outre une étape d'écriture d'une information de configuration représentative des conditions de modification de l'information d'activation. On peut ainsi configurer l'entité électronique en ce qui concerne les possibilités d'utiliser les moyens de communication à distance lors de la personnalisation en fonction de son utilisation ultérieure, sans que cela n'implique de modifications des circuits utilisés.

D'autres caractéristiques et avantages de l'invention apparaîtront à la lumière de la description qui suit, faits en référence aux dessins annexés dans lesquels :
- la figure 1 représente un exemple d'une entité électronique selon les enseignements de l'invention ;
- la figure 2 représente un exemple possible de constitution physique de l'entité électronique de la figure 1 ;
- la figure 3 est logigramme décrivant une première partie du fonctionnement de l'entité électronique de la figure 1 ;
- la figure 4 est logigramme illustrant une seconde partie du fonctionnement de l'entité électronique de la figure 1.

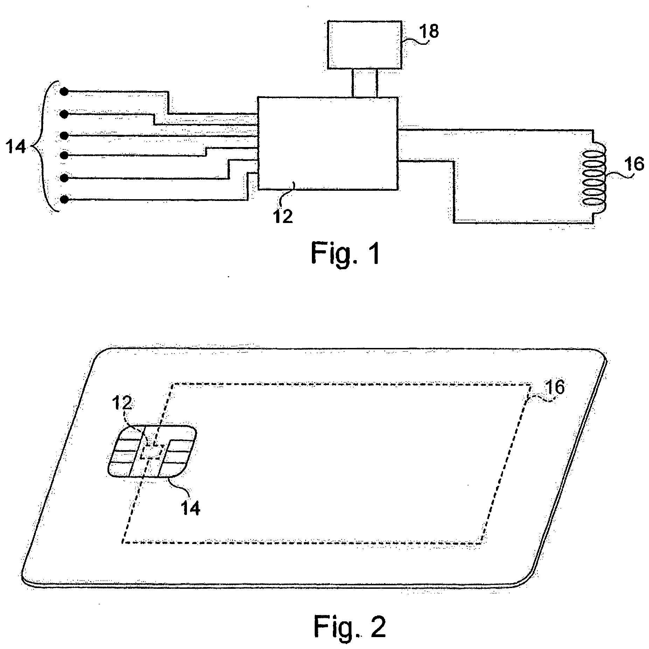

La figure 1 représente les éléments principaux d'une entité électronique selon ce mode de réalisation : cette entité électronique comprend un microcircuit 12 (par exemple un microprocesseur) qui peut être connecté à un dispositif extérieur du type terminal au moyen de contacts 14 afin d'établir une communication du type "*par contact*" entre l'entité électronique et ce terminal.

L'entité électronique comprend également une antenne 16 connectée à chacune de ses extrémités à une borne correspondante du microcircuit 12. .

L'antenne 16 fait partie de moyens de communication à distance de l'entité électronique.

Une mémoire non-volatile réinscriptible 18 (par exemple une mémoire nonvolatile du type mémoire effaçable et programmable électroniquement, généralement dénommée par l'acronyme anglo-saxon EEPROM) est également connectée au microcircuit 12.

On notera que, dans ce mode de réalisation, le microcircuit 12 peut être alimenté à travers la liaison par contacts (via au moins l'un des contacts 14) ou, indépendamment de cette première possibilité d'alimentation, par une télé-alimentation utilisation l'antenne magnétique 16. L'utilisation du mode de communication "*sans contact*" ne sera donc pas ici conditionnée par l'utilisation simultanée de la liaison par contact (à travers les contacts 14).

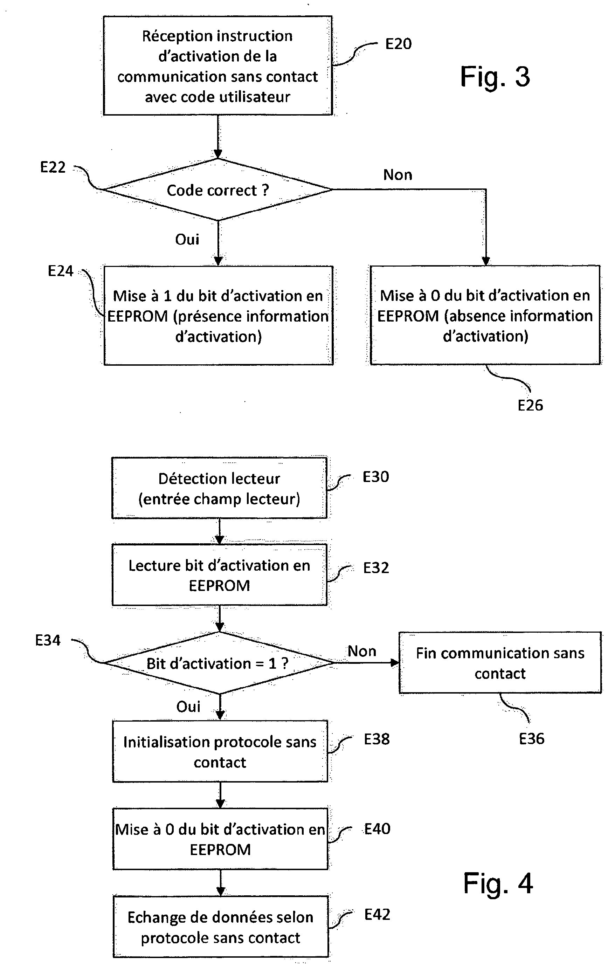

L'entité électronique pourra donc être alimentée soit par la liaison par contact, soit par télé-alimentation, ce qui donne lieu à deux modes principaux de fonctionnement décrits respectivement en figures 3 et 4 ; une alimentation simultanée par l'alimentation par contact et la télé-alimentation est naturellement possible sans remettre en cause les principes de fonctionnement des deux modes décrits ci-dessus.

Lors d'une communication de l'entité électronique avec un terminal à travers les contacts 14, le procédé illustré à la figure 3 est mis en œuvre sous la commande du microcircuit 12 (par exemple programmé au moyen d'instructions stockés en mémoire).

Au préalable, par exemple lors d'une étape d'initialisation des données stockées dans l'entité électronique (telle que par exemple l'étape de personnalisation classiquement utilisée dans la fabrication des cartes à microcircuit avant leur mise sur le marché), on met à 0 un bit d'activation stocké dans la mémoire réinscriptible 18, ce qui permet d'indiquer que, par défaut, une communication à distance est inhibée (comme cela sera décrit en détail plus bas).

Lors de l'étape de personnalisation, on peut également prévoir l'écriture d'une information de configuration qui indique (par exemple sous la forme de droits d'accès au fichier dans lequel est mémorisé le bit d'activation) dans quelle mesure l'utilisation des moyens de communication à distance de l'entité électronique pourra être autorisée via la liaison par contact, à savoir par exemple :
- à tout moment, par exemple en laissant libre accès au fichier qui contient le bit d'activation (le programme de commande de l'entité électronique pouvant toutefois dans ce cas conditionner l'émission à la saisie d'un code secret comme décrit plus bas) ;
- après une authentification du lecteur (ou du porteur de la carte qui saisit éventuellement un code sur le lecteur), ce qui constitue une variante du mode de réalisation décrit ci-après pour n'autoriser l'utilisation des moyens de communication à distance qu'aux utilisateur authentifiés ;

On se place dans la suite dans le cas où l'accès au bit d'activation est libre vis-à-vis du programme de commande de l'entité électronique.

A un certain point du fonctionnement en mode "*contacts*" (dans lequel le microcircuit 12 est alimenté par le terminal et échange des données avec celui-ci au moyen des contacts 14), le microcircuit peut recevoir du terminal une instruction d'activation de la communication sans contact, c'est-à-dire une donnée (ou plus généralement une information) qui vise à commander l'autorisation d'une fonctionnement en mode "*sans contact*" à travers l'antenne 16, comme expliqué en référence à la figure 4 (étape E20).

Dans l'exemple décrit ici, un code fourni par l'utilisateur (par exemple au moyen d'un clavier) au terminal est transmis en association avec l'instruction d'activation de manière à ce que l'autorisation du fonctionnement en mode "*sans contact*" ne soit effective qu'en présence du bon code fourni par l'utilisateur, c'est-à-dire d'un code prédéterminé et stocké (éventuellement sous forme protégée) dans la mémoire réinscriptible 18 associée au microcircuit 12 (ou dans une autre mémoire, du type mémoire morte, associée à ce microcircuit 12).

Après avoir reçu l'instruction d'activation accompagnée du code fourni par l'utilisateur, le microcircuit 12 procède à une étape E22 de vérification de l'exactitude du code fourni, c'est-à-dire en pratique de comparaison du code fourni au code mémorisé dans l'entité électronique comme déjà mentionné.

Si le code fourni correspond bien au code secret mémorisé dans l'entité électronique, l'autorisation d'une communication sans contact devient effective par la mise à 1 à l'étape E24 du bit d'activation précédemment mentionné, ce qui signifie que l'entité électronique a effectivement reçu une information d'activation de la communication sans contact correcte.

Au contraire, si le code fourni par l'utilisateur est transmis à l'entité électronique avec l'instruction d'activation à l'étape E20 n'est pas le code mémorisé par celle-ci, on procède à l'étape E26 à la mise à 0 du bit d'activation en mémoire réinscriptible 18, ce qui signifie que l'on considère alors qu'aucune information d'activation correcte n'a été reçue.

Dans les deux cas, le bit d'activation est par exemple modifié par une instruction du type "*UPDATE BINARY*" (définie par la norme ISO7816-4) après sélection du fichier qui contient ce bit d'activation par une commande du type "*SELECT*".

On peut remarquer que, dans le cas précédemment mentionné où le bit d'activation est mis à 0 lors d'une étape d'initialisation, l'étape E26 n'est pas nécessaire puisqu'elle ne change *a priori* pas la valeur du bit d'activation. On peut toutefois souhaiter l'utiliser, par exemple pour s'assurer que toute utilisation d'un code incorrect conduise à la mise à 0 du bit d'activation même si le code correct a été soumis à une phase précédente. Par ailleurs, en présence ou non de l'étape E26, la réception d'un code incorrect pourrait conduire à d'autres conséquences, comme par exemple l'émission d'un message d'erreur de la carte à destination du terminal via les contacts 14.

En outre, bien que dans un but de concision on ait décrit une seule étape de vérification de l'exactitude du code sans préciser s'il était possible de répéter ou non cette étape, on peut bien sûr envisager la possibilité de laisser à l'utilisateur un nombre limité de tentatives de saisie du code secret correct, avec pour conséquence par exemple le blocage de l'entité électronique lorsque le nombre limité de tentatives est épuisé et le code toujours erroné.

Le mode de fonctionnement "*sans contact*" sera à présent décrit en référence à la figure 4. Comme indiqué dans la suite, ce mode de fonctionnement est déclenché par l'entrée de l'entité électronique dans la portée d'un lecteur à distance, qu'il ait été procédé ou non au préalable aux étapes de la figure 3 visant à activer la liaison sans contact.

Lors de l'entrée de l'entité électronique dans le champ du lecteur (étape E30), l'entité électronique est téléalimentée (ce qui peut être vu comme une détection du lecteur par l'entité électronique) et le microcircuit 12 débute son fonctionnement en mode "*sans contact*"*.*

Au début de ce fonctionnement (de préférence lors des premières étapes du programme exécuté par le microcircuit 13, par exemple lors de la mise en œuvre des programmes d'initialisation et d'anti-collision, tels que définis dans la norme ISO14443-3), le microcircuit 12 procède à la lecture dans la mémoire réinscriptible 18 du bit d'activation (étape E32).

Il peut alors procéder à l'étape E34 à une vérification de la valeur du bit d'activation (qui, comme déjà indiqué, est indicatif d'une information d'activation de la communication sans contact).

Si le bit d'activation est à 0 (soit parce que cette valeur a été inscrite lors de l'initialisation de l'entité électronique et n'a pas été modifiée par la réception d'une instruction d'activation correcte, soit parce que ce bit a été remis à 0 suite à la saisie d'un code erroné ou à la réalisation préalable d'un échange de données autorisé sans qu'une nouvelle autorisation n'ait été fournie), on met fin à l'étape E36 à la communication sans contact, dont seules les premières étapes auront ainsi été réalisées sans que cela n'implique un échange de données.

Au contraire, s'il est vérifié par le microcircuit 12 que le bit d'activation mémorisé dans la mémoire réinscriptible 18 est à la valeur 1 (c'est-à-dire que l'on est en présence d'une information d'activation), on procède à la poursuite de la mise en œuvre de la communication sans contact, à savoir tout d'abord à une initialisation du protocole de liaison sans contact à l'étape E38 (par exemple selon la norme ISO14443-4 afin d'arriver au niveau de l'exécution du protocole "*Half-Duplex Block Transmission Protoco*/").

Une fois la communication sans contact établie (par exemple après l'étape E38), on procède à la mise à 0 du bit d'activation en mémoire réinscriptible 18, comme représenté par l'étape E40 sur la figure 4. La mise en œuvre de l'étape E40 après l'initialisation du protocole permet de s'assurer que l'entité électronique ne sera pas autorisée à établir une nouvelle communication sans contact après être sortie du champ du lecteur (sauf à recevoir une nouvelle instruction d'activation au moyen de la liaison par contact).

Toutefois, comme déjà évoqué, la mise à 0 du bit d'activation (c'est-à-dire l'inhibition de l'établissement d'une nouvelle communication sans contact) pourrait intervenir sous d'autres conditions, telles que par exemple une temporisation par rapport au moment de la réception de l'instruction d'activation (ou éventuellement par rapport à l'établissement de la liaison sans contact), l'exécution d'un nombre prédéterminé d'instructions par le microcircuit 12 (ou de commandes APDU "*Application Protocol Data Unit*") ou la réception d'un message de fin de transaction.

Selon une autre variante, on peut envisager que le bit d'activation ne soit pas remis à 0 lors du fonctionnement en mode sans contact, mais plutôt à réception d'une instruction de désactivation en mode "*contacts*". Une telle instruction de désactivation pourrait d'ailleurs être prévue même pour le cas où le bit d'activation est remis à 0 lors du fonctionnement sans contact (comme par exemple décrit en figure 4).

Dans l'exemple décrit, une fois le protocole initialisé à l'étape E38 et bien que le bit d'activation soit remis à 0 à l'étape E40, on procède ensuite à un échange de données selon le protocole sans contact à une étape E42. On remarquera toutefois que, lorsque l'échange de données de l'étape E42 sera terminé, par exemple par la sortie de l'entité électronique du champ du lecteur, ou en variante à réception de celui-ci d'une commande mettant fin à la communication sans contact, le bit d'activation ayant été remis à 0 par l'étape E40, une nouvelle itération des étapes E30 à E34 par le retour de l'entité électronique dans le champ du lecteur conduira à un échec de la communication sans contact par le passage à l'étape E36.

Dans le mode de réalisation qui vient d'être décrit, le bit d'activation (utilisé comme indicateur de la réception préalable d'une instruction d'activation correcte) conditionne l'ensemble des échanges de données en mode sans contact. En variante, on pourrait prévoir que ce bit d'activation ne conditionne que l'échange de certaines données particulières de l'entité électronique, alors que d'autres données pourraient être librement communiquées par l'entité électronique lors de son passage près d'un lecteur à distance, même si aucune instruction spécifique n'a été reçue par la liaison par contact au préalable.

Ainsi, lorsque l'entité électronique est un document d'identification électronique, on peut prévoir que certaines données présentes sur le document (comme le nom de la personne concernée) soient communiquées sans nécessiter au préalable l'activation d'une autorisation particulière, alors que l'émission d'autres données (par exemple les informations confidentielles du types données biométriques - empreintes digitales, iris ou image faciale) ne pourront être émises par l'entité électronique via la liaison sans contact qu'à la condition que l'entité électronique ait au préalable reçu une instruction valide d'activation dans ce sens au moyen de la liaison par contact.

Dans ce cas, la présence d'une information d'activation (c'est-à-dire la valeur 1 du bit d'activation) ne conditionnera pas l'établissement de la liaison sans contact à proprement parler, mais certaines étapes d'émission des données confidentielles.

Il peut alors être prévu par exemple que l'instruction d'activation ne corresponde à l'autorisation d'émettre qu'une seule fois ces données, c'est-à-dire que le bit d'activation serait alors remis à 0 immédiatement après l'émission des données confidentielles.

Selon une variante, on peut prévoir que l'information d'activation conditionne la réception de données via la liaison sans contact. On peut ainsi éviter par exemple qu'un code d'identification soit présenté à l'entité électronique via la liaison sans contact par un tiers malintentionné, à l'insu du porteur autorisé de l'entité électronique, au risque par exemple de bloquer l'entité électronique suite à la présentation de plusieurs code faux par ce tiers.

Par ailleurs, les données concernées par l'autorisation d'échange ne sont pas nécessairement limitées aux données applicatives de l'entité électronique (c'est-à-dire notamment les données portées par l'entité électronique dans sa fonction de support d'information), mais peuvent également inclure des données d'autres types, telles que des données permettant l'établissement d'un protocole de communication.

Les modes de réalisation qui viennent d'être donnés, avec les variantes envisagées, ne constituent que des exemples possibles de mise en œuvre de l'invention qui ne s'y limite pas.

## Revendications

1. Entité électronique comprenant :
- des moyens de communication par contact (4 ; 14) ;
- des moyens de communication sans contact (6 ; 16) ;
- une mémoire non-volatile réinscriptible dans laquelle est mémorisée une information d'activation à une valeur pour laquelle une communication sans contact est inhibée ;
**caractérisée par** :
- des moyens de mise à une valeur prédéterminée de l'information d'activation à réception d'une instruction d'activation à travers les moyens de communication par contact ;
- des moyens (12) pour autoriser un échange de certaines données au moins à travers les moyens de communication sans contact seulement en présence de la valeur prédéterminée de ladite information d'activation.

2. Entité électronique selon la revendication 1, **caractérisée par** des moyens pour inhiber l'échange desdites données à travers les moyens de communication sans contact en l'absence de la valeur prédéterminée de ladite information d'activation.

3. Entité électronique selon la revendication 1 ou 2, **caractérisée en ce qu'**elle est une carte à microcircuit.

4. Procédé de commande d'une entité électronique comprenant des moyens de communication par contact et des moyens de communication sans contact, **caractérisé par** une mémoire non-volatile réinscriptible dans laquelle est mémorisée une information d'activation à une valeur pour laquelle une communication sans contact est inhibée, et par les étapes suivantes :
- réception d'une instruction d'activation (E20) à travers les moyens de communication par contact ;
- mise en œuvre d'une autorisation d'échange (E24) de certaines données au moins à travers les moyens de communication sans contact, par la mise à une valeur prédéterminée (E24) de ladite information d'activation, à réception de ladite instruction d'activation ;
- vérification (E34) que la valeur de l'information d'activation est égale à la valeur prédéterminée ;
- échange desdites données (E38, E42) à travers les moyens de communication sans contact seulement en cas de vérification de l'égalité.

5. Procédé selon la revendication 4, **caractérisé par** une étape de mise de l'information d'activation à une valeur complémentaire (E40) de la valeur prédéterminée à un instant déterminé.

6. Procédé selon la revendication 5, **caractérisé en ce que** l'instant déterminé correspond à la réception d'une commande de fin de communication (E14) par les moyens de communication sans contact.

7. Procédé selon la revendication 5, **caractérisé en ce que** l'instant déterminé est déterminé par une temporisation.

8. Procédé selon la revendication 5, **caractérisé en ce que** l'instant déterminé est atteint après réception d'un nombre prédéterminé de commandes via les moyens de communication sans contact.

9. Procédé selon la revendication 5, **caractérisé en ce que** l'instant déterminé correspond à l'achèvement d'une étape d'initialisation (E38) de la communication.

10. Procédé selon l'une des revendications 4 à 9, dans lequel un code est transmis à travers les moyens de communication par contact et dans lequel ladite autorisation d'échange est effective si le code transmis correspond à un code mémorisé dans l'entité électronique.

11. Procédé selon la revendication 10, dans lequel l'instruction d'activation est reçue accompagnée du code transmis.

## Patentansprüche

1. Elektronische Entität, die Folgendes umfasst:
- Kontaktkommunikationsmittel (4; 14);
- Mittel zur kontaktlosen Kommunikation (6; 16);
- einen wiederbeschreibbaren nichtflüchtigen Speicher, in dem eine Aktivierungsinformation mit einem Wert gespeichert ist, für den eine kontaktlose Kommunikation gesperrt ist;
**gekennzeichnet durch**:
- Mittel, um beim Empfang eines Aktivierungsbefehls über die Kontaktkommunikationsmittel die Aktivierungsinformation auf einen vorbestimmten Wert einzustellen;
- Mittel (12), um einen Austausch bestimmter Daten zumindest über die Mittel zur kontaktlosen Kommunikation lediglich beim Vorhandensein des vorbestimmten Werts der Aktivierungsinformation zuzulassen.

2. Elektronische Entität nach Anspruch 1, **gekennzeichnet durch** Mittel zum Sperren des Austauschs der Daten über die Mittel zur kontaktlosen Kommunikation beim Nichtvorhandensein des vorbestimmten Werts der Aktivierungsinformation.

3. Elektronische Entität nach Anspruch 1 oder 2, **dadurch gekennzeichnet, dass** sie eine Mikroschaltungskarte ist.

4. Verfahren zum Steuern einer elektronischen Entität, die Kontaktkommunikationsmittel und Mittel zur kontaktlosen Kommunikation umfasst, **gekennzeichnet durch** einen wiederbeschreibbaren nichtflüchtigen Speicher, in dem eine Aktivierungsinformation mit einem Wert gespeichert ist, für den eine kontaktlose Kommunikation gesperrt ist, und durch die folgenden Schritte;
- Empfangen eines Aktivierungsbefehls (E20) über die Kontaktkommunikationsmittel;
- Durchführen einer Zulassung des Austauschs (E24) bestimmter Daten zumindest über die Mittel zur kontaktlosen Kommunikation, durch das Einstellen der Aktivierungsinformation auf einen vorbestimmten Wert (E24) beim Empfang des Aktivierungsbefehls:
- Überprüfen (E34), dass der Wert der Aktivierungsinformation gleich dem vorbestimmten Wert ist;
- Austauschen der Daten (E38, E42) über die Mittel zur kontaktlosen Kommunikation lediglich im Falle der Bestätigung der Gleichheit.

5. Verfahren nach Anspruch 4, **gekennzeichnet durch** einen Schritt des Einstellens der Aktivierungsinformation auf einen ergänzenden Wert (E40) des vorbestimmten Werts zu einem bestimmten Zeitpunkt.

6. Verfahren nach Anspruch 5, **dadurch gekennzeichnet, dass** der bestimmte Zeitpunkt dem Empfang eines Befehls zur Beendigung der Kommunikation (E14) durch die Mittel zur kontaktlosen Kommunikation entspricht.

7. Verfahren nach Anspruch 5, **dadurch gekennzeichnet, dass** der bestimmte Zeitpunkt durch eine Verzögerung bestimmt wird.

8. Verfahren nach Anspruch 5, **dadurch gekennzeichnet, dass** der bestimmte Zeitpunkt nach dem Empfang einer vorbestimmten Anzahl von Befehlen über die Mittel zur kontaktlosen Kommunikation erreicht ist.

9. Verfahren nach Anspruch 5, **dadurch gekennzeichnet, dass** der bestimmte Zeitpunkt dem Abschluss eines Initialisierungsschritts (E38) der Kommunikation entspricht.

10. Verfahren nach einem der Ansprüche 4 bis 9, wobei ein Code über die Kontaktkommunikationsmittel übertragen wird und die Zulassung des Austauschs wirksam wird, wenn der übertragene Code einem in der elektronischen Entität gespeicherten Code entspricht.

11. Verfahren nach Anspruch 10, wobei der Aktivierungsbefehl in Begleitung des übertragenen Codes empfangen wird.

## Claims

1. Electronic entity comprising:
- contact communication means (4; 14);
- contactless communication means (6; 16);
- a rewritable non-volatile memory in which activation information is stored that is set to a value for which a contactless communication is inhibited;
**characterised by**:
- means for setting the activation information to a predetermined value on reception of an activation instruction via the contact communication means;
- means (12) for authorising an exchange of certain data at least via the contactless communication means only in the presence of the predetermined value of said activation information.

2. Electronic entity according to claim 1, **characterised by** means for inhibiting the exchange of said data via the contactless communication means in the absence of the predetermined value of said activation information.

3. Electronic entity according to claim 1, **characterised in that** it is a microcircuit card.

4. Method of controlling an electronic entity comprising contact communication means and contactless communication means, **characterised by** a rewritable non-volatile memory in which activation information is stored that is set to a value for which a contactless communication is inhibited, and by the following steps:
- reception of an activation instruction (20) via the contact communication means;
- authorisation of exchange (E24) of certain data at least via the contactless communication means, by setting (E24) said activation information to a predetermined value, on reception of said activation instruction;
- verification (E34) that the value of the activation information is equal to the predetermined value;
- exchange of said data (E38, E42) via the contactless communication means only in the case of verification of the equality.

5. Method according to claim 4, **characterised by** a step (E40) of setting the activation information to a value that is the complement of the predetermined value at a particular time.

6. Method according to claim 5, **characterised in that** the particular time corresponds to the reception (E14) of an end of communication command by the contactless communication means.

7. Method according to claim 5, **characterised in that** the particular time is determined by a time-delay.

8. Method according to claim 5, **characterised in that** the particular time is reached after reception of a predetermined number of commands via the contactless communication means.

9. Method according to claim 5, **characterised in that** the particular time corresponds to the completion of a communication initialisation step (E38).

10. Method according to any one of claims 4 to 9, wherein a code is transmitted via the contact communicaton means and wherein said exchange authorisation is effective if the code transmitted corresponds to a code stored in the electronic entity.

11. Method according to claim 10 wherein the received activation instruction is accompanied by the code transmitted.
